(19) Europäisches Patentamt

European Patent Office

Office européen des brevets

(11) EP 0 837 319 A1

(12) EUROPEAN PATENT APPLICATION
published in accordance with Art. 158(3) EPC

(43) Date of publication:
22.04.1998 Bulletin 1998/17

(51) Int. Cl.$^6$: G01N 21/73

(86) International application number:
PCT/RU96/00100

(21) Application number: 96915251.1

(22) Date of filing: 24.04.1996

(87) International publication number:
WO 97/29361 (14.08.1997 Gazette 1997/35)

(84) Designated Contracting States:
DE FR GB IE IT SE

(30) Priority: 07.02.1996 RU 96102385

(71) Applicants:
• NAUCHNO-ISSLEDOVATELSKY INSTITUT
PRIKLADNOI FIZIKI PRI IRKUTSKOM
GOSUNIVERSITETE
Irkutsk, 664003 (RU)
• AVIAKOMPANIYA "BAIKAL"
Irkutsk, 664009 (RU)
• Alkhimov, Andrei Borisovich
Irkutsk, 664002 (RU)
• Drokov, Viktor Grigorievich
Irkutsk, 664074 (RU)
• Zarubin, Valentin Pavlovich
Irkutsk, 664047 (RU)
• Kazmirov, Alexandr Dmitreevich
Irkutsk, 664007 (RU)
• Morozov, Viktor Nikolaevich
Irkutsk, 664031 (RU)
• Podrezov, Alexei Mikhailovich
Irkutsk, 664003 (RU)
• Skudaev, Jury Dmitrievich
Irkutsk, 664058 (RU)

(72) Inventors:
• ALKHIMOV, Andrei Borisovich
Irkutsk, 664002 (RU)
• DROKOV, Viktor Grigorievich
Irkutsk, 664074 (RU)
• ZARUBIN, Valentin Pavlovich
Irkutsk, 664047 (RU)
• KAZMIROV, Alexandr Dmitreevich
Irkutsk, 664007 (RU)
• MOROZOV, Viktor Nikolaevich
Irkutsk, 664031 (RU)
• PODREZOV, Alexei Mikhailovich
Irkutsk, 664003 (RU)
• SKUDAEV, Jury Dmitrievich
Irkutsk, 664058 (RU)

(74) Representative:
Andrae, Steffen, Dr.
Balanstrasse 55
81541 München (DE)

(54) **METHOD OF DETERMINING MICRO-QUANTITIES OF METAL CONTAMINANTS IN LUBRICANT OILS, FUELS AND SPECIAL-PURPOSE FLUIDS AND DEVICE FOR CARRYING OUT SAID METHOD**

(57) To measure the concentration of dissolved metal and/or the characteristics and concentration of metal contaminants present in the form of individual particles, the object to be analysed is fed in spray form into the plasma of a gas discharge of atmospheric pressure at a rate such that metal contaminant particles enter the analysis zone one after the other. The radiation from the atomic vapour cloud is registered by photomultipliers situated at the output of a spectral device (polychromator). An analytic signal is produced at the photomultipliers containing information on the concentration of dissolved metal and vaporised mass of contaminant particles. The signal obtained is fed to an analyser unit which separates the continuous signal from the dissolved metal and the pulse signal from the metal abrasion particles. The method is carried out with the aid of a device comprising a plasma generator (2), a spectral splitting system with a condenser (3), spectral device (4), and photomultipliers (5, 6, 7). Electrical pulses from the photomultipliers reach the analogue-digital converter (8) and are processed by the computer.

FIG. 1

## Description

## FIELD OF THE INVENTION

The present invention relates to methods for determining metal trace contaminants in lubricating oils, fuels and special fluids the amounts of which permit the establishment of a rate of wear of machines and mechanisms.

## BACKGROUND OF THE INVENTION

Different methods for determining characteristics of metal trace contaminants in lubricating oils, fuels and special fluids are known. They include:

- electrical methods which are based on the measurement of electric conduction of a liquid sample [ **V.A. Pivovarov "Diagnostika letatelnykh apparatov i aviatsionnykh dvigatelei" (Diagnostic of flying apparatuses and aircraft engines. Prinsiples of theory and applied questions) Moscow, MIIGA, 1990, 140p]**;
- magnetic methods which respond to the presence of iron-based particles [ **I.V. Kheba " Diagnostika aviatsionnykh gazoturbinnykh dvigatelei (Diagnostic of airccaft gasturbine engines) Moscow, Transport, 1980, 246p]**;
- electromagnetic methods based on the measurement of inductance [ **V.P. Stepanenko "Prakticheskaya diagnostika aviatsionnykh nazoturbinnykh dvigatelei"(Practical diagnostic of aircraft gasturbine engines) Moscow, Transport, 1985, 100p**.

These methods suffer from drawbacks residing in the fact that values of an integral concentration of impurities including non-metallic particles are determined. In addition, the results of these measurements have low accuracy.

Ferrographical and spectral methods possess wide possibilities. However, they also have drawbacks consisting in a high labour intensity, a low productivity, a high cost of analyzing a spot sample (micro X-ray spectral methods), a low accuracy in the determination of the concentration and weight of unitary particles, the impossibility to determine the elemental composition of every foreign particle (spectral and ferrographical methods).

The abovementioned drawbacks do not permit the use of said methods for an express determination of all the set of characteristics of trace contaminant particles and, accordingly, for an accurate forecast of the state of engines in a wide range of machines and mechanisms.

The closest prior art has been described in a method and apparatus for the determination of a particle size distribution in the suspension of a gaseous dispersive medium and for the measurement of the concentration of particles **[Patent USA No 3825345 G01J 3/30,G01N15/02, 1974]**. This method affords introduction of particles in the suspension, one by one, into an evaporating zone, thereupon said evaporating zone is trans-illuminated with a pulsed light flux containing emission lines of the element to be analyzed, a signal so obtained is converted into an electric absorption pulse and analyzed with the height analyzer, or electric signals are integrated with respect to a plurality of particles passing through the evaporating zone during exposure. The result of integration is assumed as an analytical parameter and it is proportional to the content of the impurity to be analyzed in a sample.

An apparatus to implement the above method comprises a plasma generator in the form of a very small flame burning in a chamber in which the pressure is held subatmospheric by means of a pump. To sustain the flame, oxygen is supplied through two ducts, while aerosol is supplied through the third duct. All the ducts are maintained in a common plane where an optical axis is located. An emission spectral analysis system is composed of a monochromator, or several separable monochromators, for analyzing different materials. A spectrum recording unit is a photoelectric electron-multiplier tube which generates a corresponding electric output signal.

The drawbacks of the abovesaid prior arts are as follows:

1. In view of the fact that real light sources and atomizers have the transfer function other than $\delta$-function, a functional relation between an evaporable particle mass and a signal is most often ambiguous. Therefore, distribution of signals is not equivalent to that of particles by their masses and sizes, and a large error is allowed in a particle size determination.

2. To calibrate the method **[Patent USA No 3825345 G01J 3/30,G01N15/02, 1974]** the mass of particles of the elements to be analyzed must be known. At present, such reference standards are absent. Therefore, the method is calibrated by means of reference standards with a surely measured content. Since the element content in a sample is an integral parameter, and only single pulses are subject to recording, there is a problem to choose a correct mathematical method to plot a calibration curve.

3. When analyzing different-type samples, the influence of the matrix effect is evident. In order to simplify a technique for calibration, samples to be analyzed must be brought into one, preselected matrix.

4. In the proposed embodiment, the determination of an elemental composition of particles is impossible. Because of this, the method does not permit to obtain information on a particle composition and on the belonging of these particles to one or another machine unit.

5. The possibility to determine a metal concentration only within wear particles is lacking because these methods are integral and do not distinguish a signal from metal particles and a molten metal present in the form of additives.

## SUMMARY OF THE INVENTION

The present invention is made in order to provide a method for determining metal trace contaminants in lubricating oils, fuels and special fluids which allows an express determination of the concentration, a mean size, a number of particles, an elemental composition of every particle to be analyzed, and simplification of a procedure for calibrating the method.

The above technical problem is solved in accordance with a method for determining metal trace contaminants in lubricating oils, fuels and special fluids comprising the steps of: introducing a sample into a spectral source at a rate which, with a predetermined probability, provides for a time-divided signal recording from every particle of the impurity to be analyzed; recording optical emission signals; converting said optical signals into electric pulses; measuring said pulses; and determining the mass of individual metals in the impurity particles according to the pulse values and the calibration curves; characterized in that the sample and reference standards are prepared beforehand; the sample is introduced in the form of aerosol by atomizing into a cyclone-type plasmatron; a calibration curve is plotted according to a pulsed and background radiation area; said recording of optical signals is carried out simultaneously by two or more measurement channels each being adjusted to an analytical emission line of one metal; wherein for signals recorded simultaneously in each channel, there is determined a mass ratio of respective metals according to which, with regard to stoichiometric relationships of metals, a particle composition is established, and based on data obtained a number of particles of individual trace contaminants, a metal content in wear particles and a mean particle diameter are established by which a rate of wear of machines and mechanisms is determined.

The proposed method is implemented in an apparatus which comprisws a plasma generator, a system for spectral emission decomposition and a spectrum recording unit; said apparatus additionally comprises a unit for introducing a sample into the plasma generator made in the form of an ultrasonic atomizer, said plasma generator is a microwave cyclone-type plasmotron, said spectrum recording unit is made in the form of two or more channels for isolating and recording a signal by photoelectric electron-multiplier tubes, wherein each of said channels being adjusted to an analytical emission line of one metal.

Said microwave cyclone-type plasmatron comprises an energy-input waveguide, a cylindrical discharge chamber passing through the waveguide perpendicular to its wide wall, a vortex generator, located at the bottom part of said discharge chamber, an atomized fluid supply unit, an exit nozzle, wherein the exit nozzle is built in the vortex generator and located at the bottom part of the dicharge chamber.

When introducing an atomized fluid along the axis of a cyclone discharge chamber, large particles of more than 30 µm in diameter do not succeed in changing a mechanical trajectory and find their way into the exit nozzle having passed through the microwave plasma. This permits to attain, on the one hand, a stable operation of the plasmatron at the expense of a vortex stabilization of the microwave plasma and, on the other hand, a high coefficient of introducing finely divided particles into the plasma in the absense of their ejection on the walls.

An ultrasonic atomizing chamber comprises an ultrasonic transducer; a concentrator on the end of which a fluid-atomizing unit is installed, said fluid-atomizing unit is made in the form of a mixing chamber having inlet pipes to supply a fluid and a carrier gas and an outlet pipe to extract a sol of the fluid to be analyzed, wherein both the mixing chamber and the outlet pipe being ultrasound-activated.

A fluid to be analyzed is atomized in a closed chamber which in turn vibrates with a concentrator frequency, and is blown out therefrom with a predetermined rate by a carrier gas, which makes it possible to obtain a finely divided sol having a particle size not exceeding 2 µm. Furthermore, an ultrasound activation of the mixing chamber and the outlet pipe rules out the possibility of settling-out or retarding metal particles contained in the fluid and falling on the walls of the apparatus.

## BRIEF DESCRIPTION OF THE DRAWINGS

These and other objects, features and advantages of the present invention will become more clear from the following description of a method for determining maral trace contaminants in lubricating oils, fuels and special fluids and an apparatus therefor taken in conjunction with the accompanying drawings, in which:

FIGURE 1 is a block diagram showing an apparatus to implement a method for determining trace contaminants;
FIGURE 2 is a graph showing emission pulses to be recorded by photoelectric electron-multiplier tubes from single-element metal particles;
FIGURE 3 is a graph showing emission pulses from compound particles;
FIGURE 4 shows a microwave cyclone-type plasmatron;
FIGURE 5 shows an ultrasonic atomizing chamber;
FIGURE 6 shows a device for the preparation of reference standards.

## BEST MODE TO CARRY OUT THE INVENTION

A method according to the present invention is carried out as follows.

Sampling of an oil or other special fluid to be analyzed is performed beforehand.

Frequently, samples to be analyzed contain organo-metallic complexes introduced as additives which improve one or another property of oils and special fluids. On the other hand, when operating of mechanisms, metal particles from friction parts enter a working fluid. Because of this, one and the same metal in working fluids may be present in two forms: a metal in the form of particles characterizing wear of assemblies, and molecular compounds of the same metal which are part of an additive. During a process of analyzing fluids, a "blank" test is always to be done, which permits to somewhat decrease analysis error related to a metal "dissolved" in the fluid. However, it ignores variations in the content of metals in fluids associated with tolerances when introducing additives thereto. Therefore, to correctly determine the concentration and other characteristics of wear particles as well as to bring samples and reference standards to be analyzed into a common matrix, a selected sample of an oil or other special fluid to be analyzed and having 20 - 50 ml in volume is thoroughly stirred by means of ultrasound or a stirrer, then placed in a centrifuge beaker followed by centrifuging for 60 minutes at 4000 revolutions per minute. Centrifuging allows separation of wear metal particles having a higher density from an oil-dissolved metal present in a molecular form. Metals of additives including readily ionizable ones, remain in an upper layer which is removed after centrifuging is over. The upper fluid layer containing no foreign particles is removed with a pipette. In doing this, a pellet isolated must not be captured and as little liquid as possible must be left in the beaker. Then the beaker is filled upwith a selected diluent free of elements to be analyzed (this diluent was a basis for preparing reference standards), a mixture so obtained is thoroughly stirred and poured into a test tube. The beaker is thoroughly washed with the diluent and dried. A volume of the diluent added to the test tube is determined by an analyst depending on the task of concentrating or diluting the sample.

Centrifuging the sample and diluting a pellet so formed make it possible:

- to separate impurity metals which found their way into the fluid in the form of particles during a wear process of a particular mechanism from those metals which were introduced into the fluid in the composition of additives;
- to separate a base with additives containing impedient, readily ionizable elements;
- to bring the samples and standards to be analyzed into a single matrix by diluting a pellet with a diluent selected by an analyst;
- to concentrate elements to be determined.

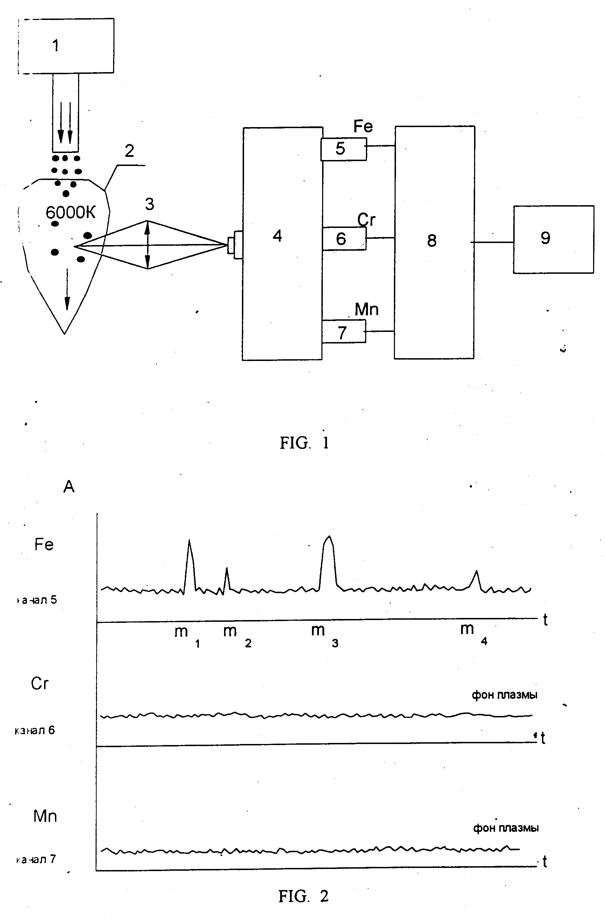

A sample prepared beforehand by means of an ultrasonic atomizer 1 (Figure 1) is transformed into a finely divided sol. The sol so obtained which comprises liquid droplets and metal particles is continuously forced with a carrier gas stream in a gas-discharge plasma (with a temperature of 5200 ° K) of a microwave cyclone-type plasmatron 2.

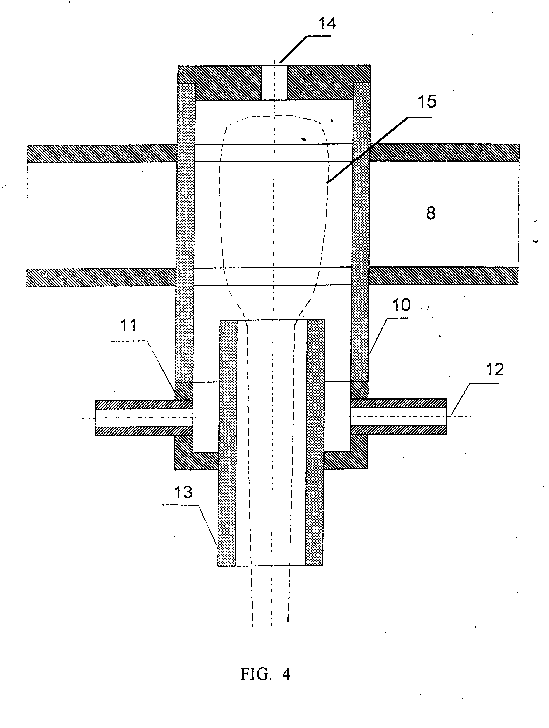

A microwave power in said cyclone-type plasmatron (Figure 4) supplied through a waveguide 8 maintains a microwave atmospheric discharge in a discharge chamber 9 formed by a cylindrical quartz tube, a sol supply unit 13, a vortex generator 10 and an exit nozzle 12. A plasma-forming gas is supplied through the pipes 11 of the vortex generator 10 and passed to the exit nozzle 12 after having been heated up in the microwave plasma. A microwave discharge stabilization is achieved by tangentially supplying the plasma-forming gas which additionally acts as a coolant for the discharge chamber walls and the exit nozzle. The sol is fed through the sol supply unit 13 located at the upper part of the discharge chamber, passed, while heating, through the microwave plasma and withdrawn to the exit nozzle 12.

A main advantage of said microwave cyclone-type plasmatron consists in the fact that at the expense of forming a vortex-type flow at the bottom part of the chamber having a radial component of a gas-stream velocity directed to the axis of the discharge chamber, finely divided particles of less than 10 μm in diameter are stabilized in a plasma region and are not ejected on the walls.

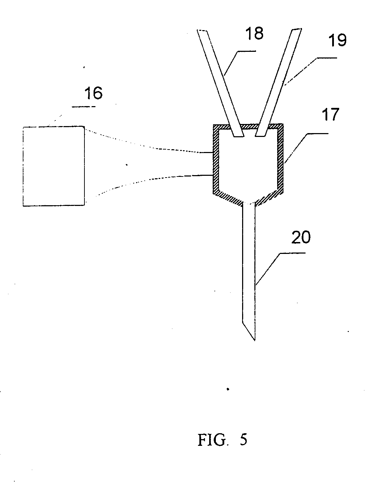

An atomizing device 1 (Figure 5) operates under such duty that particles enter the plasma one after another. A fluid to be atomized is fed to a mixing chamber 16 through a pipe 17, while a carrier gas is fed thereto through a pipe 18. In the chamber 16, the fluid is atomized, under the action of ultrasonic oscillations, into a finely divided sol and mixed with air thus forming an air-droplet mixture. The frequency of ultrasonic oscillations is 20 - 60 kHz. The flow rate of a carrier gas is from 0.05 to 0.5 ml/min, the flow rate of a fluid to be atomized is from 0.01 to 1.0 ml/min, optimum 0.3 ml/min. Through an outlet pipe 19, the air-droplet mixture is uniformly withdrawn outwards. Since both the pipe and the mixing chamber are ultrasound-activated there is no formation of large condensed droplets (over 2 μm) at the outlet.

When particles fall within the plasma, the latter gets heated, evaporated, and an atomic steam gets excited, that is to say, a particle burst (scintillation) does occur. A rate of entering a sample to be analyzed is chosen so that trace contaminant metal particles enter the plasma one after another. The probability of superimposition (coalescense) of clouds of an atomic steam of different particles is very small.

An atomic steam emission by means of a condenser 3 (Figure 1) enters a spectral device 4. The emission spectrally decomposed by a polychromator 4 is recorded at the outlet using photoelectric electron-multiplier tubes 5 - 7.

A duration of emission pulses of the particles is proportional to their residence time in the plasma and is equal to 1 - 10 msec, while the pulse amplitude or area is proportional to a particle mass evaporated. Therefore, those sequences of pulses having various amplitudes and durations are present at the outlet of photoelectric electron-multiplier tubes. Electric pulses from said photoelectric electron-multiplier tubes enter an analog-to-digital converter 8 and are processed by the computer.

A metal concentration in wear particles and a dissolved metal concentration are determined by special calibration curves of the computer.

Referring now to Figure 1, there are shown only three channels for extracting a signal; their number depends on the type of a polychromator and may be increased. Each channel is preset to record bursts of lines of a predetermined element.

In falling of Fe-containing particles within the plasma, a sequence of emission pulses will be present only at the channel 5 (see Figure 2). At the channels 6 - 7, a continuous background plasma radiation is observed. That is why only values belonging to pulses present at the channel 5 are entered into memory of the computer.

In case where an oil comprises both compound metallic particles composed of several elements, for example a Fe - Cu compound, and simple particles in which every particle is represented by a single element, the computer sorts emission pulses by simultaneity of their emergence.

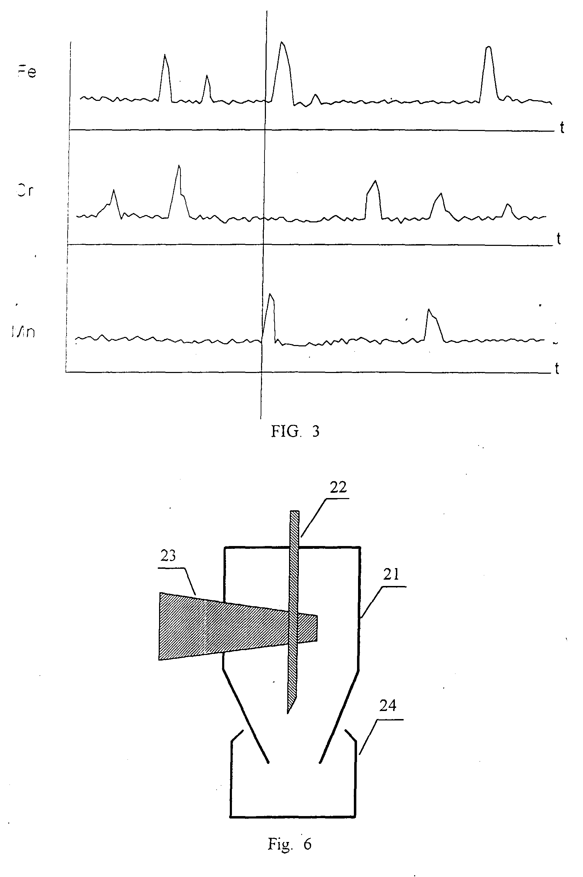

Coincidence in time of two or more emission pulses points to the presence of a compound particle. Figure 3 diagrammatically shows, as an example, those pulses coincident into the Fe and Cu channels.

Each pulse is converted to the particle mass from a corresponding calibration dependence, and stoichiometric relationships thereof enable one to judge upon a particular type of composition of a material of which the particles are composed.

The error of determining a stoichiometric composition was estimated based on the particles prepared using a specific technology with a known percentage ratio of elements, and was found to make up $S_r < 0.25$. It follows that the dependence of a scintillation signal on a particle mechanical trajectory does not play an important part when measuring an elemental composition of particles to be analyzed.

In addition, validity of determining an elemental particle composition by the scintillation method was estimated based on the results obtained with the microanalyzer Camebax SX-50.

Works on the pulse (scintillation) recording of signals are known [**Lorentz J. Method of and apparatus for use in measuring the particle size distribution and or concentrationof particlesin suspension in gaseous dispersing medium; Y. Raikhbaum, V.Malykh, M.Luzhnova "Scintillation method of spectrum analysis of tantalum and niobium into ores" Plant laboratory, 1963, v 29, No6, p 677; S.Prokopchuk "Scintillation spectrum analysis in geology" Irkutsk, Institute of geochemistry RAS, 1994, p 64**]. The pulse amplitude is taken as an analytical pulse parameter, assuming that a particle of a larger mass produces pulses of a higher amplitude. Employing such an approach, the dependence of an analytical signal (of the amplitude of pulse $A$) on the mass of an evaporating particle, $m$, looks like follows:

$$m_{pat} = f(A_S) = aA_S \qquad (1)$$

In this case, each individual pulse is converted to a particle mass followed by plotting a bar chart of the particle size distribution. In practice, it is proceeded as advised below. A pulse signal is supplied to a multichannel height analyzer, and it is considered that a signal amplitude distribution obtained is in accord with a particle size distribution. Such method for the determination of particle sizes suffers from substantial drawbacks. Thus, for example, it ignores a pulse shape which defines dynamics of a particle motion and evaporation in a spectrum excitation source.

The best analytical parameter of a pulse is its area which is proportional to the mass of a steam (the amplitude is proportional to the concentration of a steam at a given moment).

A design of the procedure for scintillation analysis using a pulse area, $s$, as an analytical parameter is known [ **Sertificate of invention USSR No 1368736, G01N 21/73, 1985**]. The mass of each particle is estimated from a pulse calibration curve:

$$m_{pat} = a + bs + cs^2 \qquad (2)$$

wherein calibration coefficients are determined by the method of regression analysis. According to this procedure, a particle size distriburion is obtained from a particle area distribution. However, this procedure ignores a number of substantial factors inherent in real light sources and atomizers.

Firstly, due to a high concentration of steams produced in the course of a particle flash, self-absorption of an emission line may occur. In such a case, emitted intensity shall not be proportional to the concentration of a steam. It has been showed experimentally that a steam concentration, $m$, and an emission pulse area, $s$, borne the following relationship:

$$m \approx s^3 \tag{3}$$

In a complete particle evaporation, a linear dependence of a pulse area on a particle diameter is observed:

$$d_{pat} \approx s \tag{4}$$

Secondly, large particles may be substantially under-evaporated. In this case, there is a certain range of sizes over which particles do evaporate completely. Outside this range, an analytical signal from a larger particle may be significantly smaller than that from the less particle. In such a case, said dependence of the pulse area on the diameter is ambiguous:

$$d_{pat} = k_1 s - k_2 s^2 \tag{5}$$

Thirdly, as a result of a random mechanical trajectory of particles within a light source, they may pass through different temperature zones and evaporate not uniformly. This results in that the dependence of an analytical signal on the particle mass is random in character and may only suggest on the probability that a particle with the mass $m$ produces the availability of the signal $s$:

$$P_{m/s} = K(m,s)ds \tag{6}$$

In this case, it is impossible to estimate the mass of an evaporable particle as a function of a single pulse area. The only parameter with which one may reliably form an estimate is an average particle mass:

$$\overline{m}_{pat} = \frac{1}{N_{pat}} \int_s \mu(s) F(s) ds \tag{7}$$

where $\mu(s)$ - the pulse calibration curve which is evaluated from the functional minimization condition (9).

To estimate the state of engines, machines and mechanisms, it is necessary to follow the dynamics of changing an average particle size in the course of time of operating age. This may be done avoiding calibration; it is enough to follow the dynamics of changing an average pulse area value.

The calibration dependence is constructed as follows.

To determine the content of metal contaminants in the fluid to be analyzed, it is necessary to find out the dependence of an analytical parameter on the mass of a certain element in the sample. This dependence will vary for different types of fluid, flow rates of gases, etc.

To eliminate the influence of these factors on the calibration dependence, a multiparametric approach to calibrate the method was used.

In the general case, said analytical parameter may be represented by pulsed and background radiation areas. Recording of all pulses during one exposure permits discovery of an area distribution of pulses, that is to say, a signal distribution bar chart.

The content of an element-impurity in the sample to be analyzed serves as input parameter for calibrating the method. Calibration consists in finding the content as a function of characteristics of said signal distribution bar charts:

$$C = \frac{1}{m_p} \int_s \mu(s) F(s) ds \tag{8}$$

where $C$ - the content of particles in the sample; $m_p$ - the weighed amount; $F(s)$- the signal distribution bar chart; $\mu(s)$ - the calibration dependence.

The calibration dependence is found out from the functional minimization condition:

$$\min(U) = \min\left[\sum_{i=1}^{N}\left(C_i^A - \frac{1}{m_{p,i}}\int_s \mu(s)F_1(s)\,ds\right)^2\right] \qquad (9)$$

where $N$ - a number of reference samples used for calibration; $C_i^A$ - a certified content of the $i$-sample; $m_{p,i}$ - the weighed amount of the $i$-sample; $F_i(s)$ - the signal distribution bar chart.

To minimize the functional (9), the calibration dependence is approximated by the polinomial:

$$\mu(s) = \sum_{j=0}^{j_0} a_j s^j \qquad (10)$$

In this case, it follows from (8) that calibration of the scintillation method amounts to the construction of a regression model:

$$Cm_p = M = \sum_{j=0}^{j_0} a_j Y_j \qquad (11)$$

where

$$Y_j = \int_s s^j F(s)\,ds$$

signates the moments of a signal distribution bar chart.

Specifically, when $j = 0$, a calibration dependence is obtained by a number of particles (pulses), because $Y_o = N_{pat}$, then:

$$Cm_p = a_o N_{pat} \qquad (12)$$

In the general case, signal distribution bar chart will be dependent on various factors such as a sample matrix, a plasma-forming gas flow rate, a plasma temperature, etc. In this case, coefficients of expansion of the calibration dependence in (10) will be dependent on these factors, and to decrease fixed errors of the analysis, it is necessary to construct a series of regression models for each set of factors:

$$Cm_p = \sum_{j=1}^{j_0} a_j^{f_1} Y_j^{f_1} \qquad (13)$$

$$Cm_p = \sum_{j=1}^{j_0} a_j^{f_2} Y_j^{f_2}$$

$$-----------------------------$$

$$Cm_p = \sum_{j=1}^{j_0} a_j^{f_k} Y_j^{f_k}$$

If a factor value may be measured, for example, a plasma temperature in a spectrum excitation source, then coefficients of expansion (10) may also be expanded into a series according to these factors. In the latter case, it is possible to construct one regression model which will include the measured factors:

$$c_{m_P} = \sum_{j=0}^{j_0} a_j Y_j + \sum_k b_k f_k \qquad (14)$$

Analysis of a sample is carried out in accordance with the following scheme:

a) an area distribution of pulsed signals and an area of the background signal per one exposure are found;
b) according to a current set of factors which cannot be measured, corresponding coefficients of expansion of the calibration dependence is selected;
c) according to the calibration dependence, the content of an impurity element in an oil sample is determined.

Such calibration dependence is called universal, since it includes, as particular cases, calibration dependences according to a number of particles, a total surface and a pulsed calibration curve . The present method for calibrating permits elimination of fixed and random errors associated with the influence of unaccounted-for factors on the signal distribution bar chart.

A correct preparation of standard samples prior to analysis is of great importance. It is known that during a long-term storage of standard samples (in excess of one month), decomposition of organo-metallic compounds, adhesion of metal particles, their strong adherence to a vessel bottom occur. To eleminate the above factors, a weighed amount of a standard sample necessary for analysis is selected. Said weighed amount is ultrasound-activated and stirred employing a vibration stirrer. After stirring, standard samples are allowed to stand in order to remove air bubbles. Thereupon, immediately prior to analysis, a predetermined amount (not less than 1 ml) of the sample is taken and additionally passed through an atomizing chamber 20 (Figure 6) containing an ultrasonic atomizer 22. The whole volume of the standard sample having been passed through the atomizer is converted to a finely divided sol having a droplet size commensurable with a metal particle size ($d < 2$ $\mu$m). In this case, films and conglomerates of particles fully decompose, and particles are uniformly mixed with an oil sol. Following ultrasound treatment, the standard sample is supplied to a reservoir 23 for the collection of spent standard samples. Right after CO treatment, it is ready for use.

The present invention may be useful for the diagnostics of a rate of wear of engines, machines and mechanisms in the art of mechanical engineering, air, railway, water, motor transport and other fields of industry.

Having described presently preferred embodiments of the present invention, it is to be understood that it may be otherwise embodied within the scope of the appended claims.

## Claims

1. A method for determining metal trace contaminants in lubricating oils, fuels and special fluids comprising the steps of:

    introducing a sample into a spectral source at a rate which, with a predetermined probability, provides for a time-divided signal recording from every particle of the impurity to be analyzed;
    recording optical emission signals; converting said optical signals into electric pulses; measuring said pulses; and determining the mass of individual metals in the impurity particles according to the pulse values and calibration curves; characterized in that the sample and reference standards are prepared beforehand; the sample is introduced in the form of aerosol by atomizing into a cyclone-type plasmatron; a calibration curve is plotted according to a pulsed and background radiation area; said recording of optical signals is carried out simultaneously by two or more measurement channels each being adjusted to an analytical emission line of one metal; wherein for signals recorded simultaneously in each channel, there is determined a mass ratio of respective metals according to which, with regard to stoichiometric relationships of metals, a particle composition is established, and based on data obtained a number of particles of individual trace contaminants, a metal content in the particles and a mean particle diameter are established by which a rate of wear of machines and mechanisms is determined.

2. A method according to Claim 1, characterized in that the preparation of a sample is carried out by centrifuging, a pellet formed is isolated and diluted with an additive-free diluent based on which reference standards have been prepared.

3. A method according to Claims 1, 2, characterized in that the reference standards are prepared by activating samples by means of an ultrasonic atomizing chamber.

4. An apparatus to implement a method according to Calim 1 comprising a plasma generator, a system for spectral emission decomposition and a spectrum recording unit, characterized in that it additionally comprises a unit for introducing a sample into the plasma generator made in the form of an ultrasonic atomizer, said plasma generator is a microwave cyclone-type plasmotron, said spectrum recording unit is made in the form of two or more channels for isolating and recording a signal by photoelectric electron-multiplier tubes, wherein each of said channels being adjusted to an analytical emission line of one metal.

5. A plasmatron according to Claims 1, 4, comprising an energy-input waveguide, a cylindrical discharge chamber passing through the waveguide perpendicular to its wide wall, a vortex generator located at the bottom part of said discharge chamber, a sol supply unit, an exit nozzle, characterized in that the exit nozzle is built in the vortex generator and located at the bottom part of the dicharge chamber.

6. An ultrasonic atomizing chamber to implement a method according to Claims 3, 4, comprising an ultrasonic transducer, a concentrator on the end of which a fluid-atomizing unit is installed, characterized in that said fluid-atomizing unit is made in the form of a mixing chamber having inlet pipes to supply a fluid and a carrier gas and an outlet pipe to extract a sol of the fluid to be analyzed, wherein both the mixing chamber and the outlet pipe being ultrasound-activated.

FIG. 1

FIG. 2

FIG. 3

Fig. 6

FIG. 4

FIG. 5

## INTERNATIONAL SEARCH REPORT

International application No.

PCT/RU 96/00100

| A. | CLASSIFICATION OF SUBJECT MATTER |
| --- | --- |

IPC6 : G01N 21/73

According to International Patent Classification (IPC) or to both national classification and IPC

| B. | FIELDS SEARCHED |
| --- | --- |

Minimum documentation searched (classification system followed by classification symbols)

IPC6 : G01N 21/71-21/73, G01J 3/30, G01N 21/26, G01N 33/28

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US, A. 3825345 (SARTORIUS-MEMBRANFILTER GmbH), 23 July 1974 (23.07.74), claims, abstract | 1-4,6 |
| A | US, A, 3644743 (CESKOSLOVENSKA AKADEMIE VED), 22 February 1972 (22.02.72), claims | 1-4,6 |
| A | US, A, 4448887 (THE UNITED STATES OF AMERICA as represented by the Secretary of the Air Force), 15 May 1984 (15.05.84), abstract | 1 |
| A | SU, A, 449288 (I.I. Devyatkin et al.), 15 December 1974 (15.12.74) | 5 |
| A | US, A, 5066124 (BODENSEEWERK PERKIN ELMER GmbH), 19 November 1991 (19.11.91) | 1 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 November 1996 (08.11.96) | 16 October 1996 (16.10.96) |

| Name and mailing address of the ISA/ RU | Authorized officer |
| --- | --- |
| | |
| Facsimile No. | Telephone No. |

Form PCT/ISA/210 (second sheet) (July 1992)